(19) Europäisches Patentamt
European Patent Office
Office européen des brevets

(11) Veröffentlichungsnummer: **0 064 208**
**B1**

(12) # EUROPÄISCHE PATENTSCHRIFT

(45) Veröffentlichungstag der Patentschrift: **21.08.85**

(51) Int. Cl.[4]: **G 03 C 5/54,** G 03 C 1/40, C 09 B 29/10, C 09 B 45/14

(21) Anmeldenummer: **82103261.2**

(22) Anmeldetag: **19.04.82**

(54) **Farbfotografisches Aufzeichnungsmaterial.**

(30) Priorität: **30.04.81 DE 3117243**

(43) Veröffentlichungstag der Anmeldung: **10.11.82 Patentblatt 82/45**

(45) Bekanntmachung des Hinweises auf die Patenterteilung: **21.08.85 Patentblatt 85/34**

(84) Benannte Vertragsstaaten: **BE DE FR GB**

(56) Entgegenhaltungen: **DE - A - 2 913 140**

(73) Patentinhaber: **AGFA-GEVAERT Aktiengesellschaft, D-5090 Leverkusen 1 (DE)**

(72) Erfinder: **Schenk, Günther, Dr., Rybniker Strasse 6, D-5000 Köln 80 (DE)**
Erfinder: **Bergthaller, Peter, Dr., Wolfskaul 1, D-5000 Köln 80 (DE)**
Erfinder: **Wolfrum, Gerhard, Dr., Domblick 17, D-5090 Leverkusen 3 (DE)**
Erfinder: **Stolzenburg, Rudolf, Ing. grad., Bogenstrasse 27, D-4018 Langenfeld (DE)**

EP 0 064 208 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft ein farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung enthält, aus der bei der Entwicklung ein diffusionsfähiger komplexierbarer Azofarbstoff freigesetzt wird.

Das Farbdiffusionsübertragungsverfahren beruht darauf, daß bei der Entwicklung in einem lichtempfindlichen Element nach Maßgabe einer vorangegangenen Belichtung eine bildmäßige Verteilung diffusionsfähiger Farbstoffe erzeugt und auf ein Bildempfangselement übertragen wird. In einigen Fällen läßt sich die Lichtechtheit der nach einem solchen Verfahren erzeugten Farbbilder in bekannter Weise dadurch verbessern, daß durch Metallionen komplexierbare Farbstoffe, z. B. Tridentat-azofarbstoffe verwendet werden, die durch nachträgliche Behandlung mit geeigneten Metallionen stabile Farbstoff-Metall-Komplexe bilden. Die Verbesserung der Lichtechtheit von Azofarbstoffbildern, die nach dem Farbdiffusionsübertragungsverfahren oder nach einem anderen fotografischen Verfahren, etwa nach dem Silberfarbbleichverfahren erhalten worden sind, durch Komplexierung mit Metallionen ist beispielsweise bekannt aus DE-AS 1 116 532 oder DE-AS 1 125 279.

In der US 4 148 643 sind nicht diffundierende farbgebende Verbindungen (Farbabspalter) beschrieben, die bei der Entwicklung diffusionsfähige metallisierbare gelbe Azofarbstoffe der Formel I freisetzen,

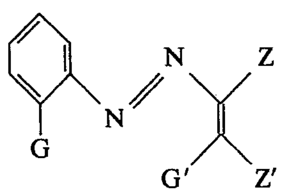

(I)

worin

Z eine elektronenanziehende Gruppe,
Z′ Alkyl, Aryl oder eine gegebenenfalls substituierte Aminogruppe,
G eine zur Ausbildung eines Metallchelates befähigte Gruppe und
G′ OH oder einen hydrolysierbaren Vorläufer davon bedeuten.

Die dort genannten gelben Azofarbstoffe, sie können auch als Hydrazone aufgefaßt werden (Tautomere), umfassen unter anderem Kupplungsprodukte von Diazoniumsalzen mit Acetoacetanilid, Benzoylacetanilid, Cyanacetophenon, Cyanaceton, Cyanacetanilid und Cyanpinakolin.

Hervorgehoben wird die hohe Lichtstabilität der Metallkomplexe. Wenn für G und G′ deren hydrolysierbare Vorläufer verwendet werden, ist die erwähnte Tautomerie unterdrückt, d. h. der Chromophor ist durch Acylierung der Gruppe G′ unter Blockierung der Carbonylgruppe in einer durch niedrigere Extinktionswerte gekennzeichneten tautomeren Form fixiert. Durch die Verwendung dieser »geshifteten« Form wird vermieden, daß die Filterwirkung des Farbstoffes zu einem Verlust an fotografischer Empfindlichkeit führt.

Es ist allerdings bekannt, daß durch Acylierung geshiftete Farbstoffe vom Hydrazontyp nicht stabil sind, sondern bei Lagerung in Gegenwart von Restfeuchte in einer Gelatineschicht allmählich entacyliert werden, so daß die optische Durchlässigkeit der Schicht während der Lagerzeit allmählich abfällt und hierdurch bedingt die Empfindlichkeit der zugeordneten blauempfindlichen Silberhalogenidemulsion zurückgeht.

Es ist daher wünschenswert, nachkomplexierbare Monoazofarbstoffe vom sogenannten Tridentattyp zu verwenden, die auch ohne Blockierung der Carbonylgruppe durch Acylierung (in Form einer acylierten Enolgruppe, wie in der US 4 148 643 beschrieben) eine stark verminderte Absorption aufweisen und erst nach dem Angriff des komplexierenden Metallions, bevorzugt eines Nickel- oder Kupferions, die hohe Extinktion des Bildfarbstoffkomkplexes erreichen.

Es wurde gefunden, daß die gestellte Aufgabe auf besonders einfache Weise gelöst werden kann, wenn als Farbabspalter nicht diffundierende Kupplungsprodukte von geeigneten Diazoniumsalzen mit Cyanessigestern verwendet werden.

Gegenstand der Erfindung ist ein farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung enthält, aus der unter den Bedingungen der alkalischen Entwicklung als Funktion der Entwicklung der Silberhalogenidemulsionsschicht ein diffusionsfähiger, durch Metallionen komplexierbarer Azofarbstoff freigesetzt wird, dadurch gekennzeichnet, daß der Azofarbstoff in einer seiner tautomeren Formen der folgenden Formel II entspricht:

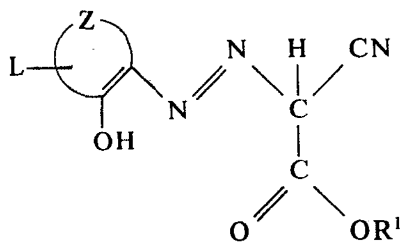

(II)

worin bedeuten

$R^1$ Alkyl, Alkenyl oder Cycloalkyl mit bis zu 8 C-Atomen;
Z einen Rest zur Vervollständigung eines Benzol- oder Naphthalinringes; und
L einen Substituenten mit einer Gruppe, die aus der Abspaltung von einem Trägerrest resultiert.

Der durch $R^1$ dargestellte Alkylrest kann unverzweigt oder verzweigt sein und gegebenenfalls weitere Substituenten enthalten, z. B. Hydroxyl-, Alkoxy-, Aroxy-, Cyan- oder Arylgruppen. Beispiele für $R^1$ sind Methyl, Benzyl, Ethyl, Hydroxyethyl, Methoxyethyl, Phenoxyethyl, Cyanethyl, Phenethyl, Propyl, Isopropyl, Hydroxypropyl, Allyl, n-Butyl, Isobutyl, sek.-Butyl, Pentyl und dessen Isomere einschließlich Neopentyl.

Beispiele für durch $R^1$ dargestellte Cycloalkylreste sind Cyclopentyl und Cyclohexyl.

Der durch Z vervollständigte Benzol- oder Naphthalinring kann außer der Azogruppe, der OH-Gruppe und dem Substituenten L weitere Substituenten $R^2$, $R^3$ tragen, beispielsweise Halogen oder Alkyl-, Alkoxy- oder Acylaminogruppen mit vorzugsweise nicht mehr als 3 C-Atomen, weiterhin $-NO_2$, $-CN$, $CF_3$, Alkylsulfonyl-, Arylsulfonyl-, Carbonamidoalkyl- oder Alkoxycarbonylgruppen.

Der Substituent L stellt eine Gruppe dar, die aus der Abspaltung von einem redoxaktiven Trägerrest hervorgeht, oder er enthält eine solche Gruppe. Da es im wesentlichen nur auf die Anwesenheit einer solchen Gruppe ankommt, unterliegt im übrigen die Struktur des Substituenten L keinerlei Beschränkungen, abgesehen davon, daß im Interesse einer erwünschten hohen Diffusionsgeschwindigkeit des freigesetzten Azofarbstoffes der Substituent L nicht zu voluminös sein darf. Beispiele für geeignete Substituenten L sind Sulfinat-, Sulfamoyl- oder phenolische Hydroxyl-(Phenolat-)gruppen, die entweder direkt oder über ein Zwischenglied, das dann einen integrierenden Bestandteil des Substituenten L bildet, an den durch Z vervollständigten Ring angeknüpft sind. Beispiele für geeignete Zwischenglieder sind Alkylengruppen, Arylengruppen und N-Phenylsulfamoyl- oder N-Phenylcarbamoylgruppen der Formel

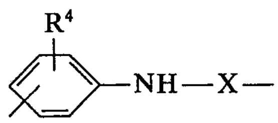

worin X für $-SO_2-$ oder $-CO-$ und $R^4$ beispielsweise für Wasserstoff, Chlor, Methyl oder Methoxy steht.

Weiterhin verfügen die Farbstoffe der Formel II z. B. in Form der Gruppen L, $R^2$, $R^3$ oder in Form von Bestandteilen dieser Gruppen über geeignete funktionelle Gruppen zur Erhöhung der Farbstärke und zur Einstellung eines günstigen Diffusions- und Beizverhaltens, z. B. über anionische oder anionisierbare Gruppen, wie Sulfonat-, Sulfinat-, Phenolat-, Disulfimid-, Carboxylat- oder Sulfamoylgruppen.

In einer bevorzugten Ausführungsform setzen die erfindungsgemäß verwendeten Farbabspalter Farbstoffe der folgenden Formel III in Freiheit:

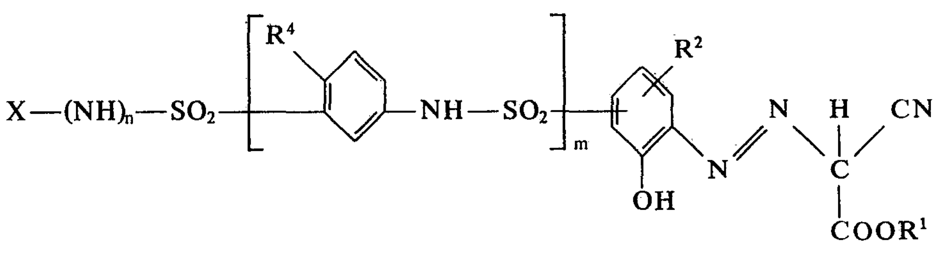

(III)

worin bedeuten

X H;
$R^1$ Alkyl, Alkenyl oder Cycloalkyl mit bis zu 8 C-Atomen;
$R^2$ H oder Cl;
$R^4$ H, Cl, $-CH_3$, $-OCH_3$ oder $-OC_2H_5$;
m 0 oder 1;
n 0 oder 1.

Den erfindungsgemäßen Farbstoffen der Formel II ist eigen, daß die Absorptionsspektren der Farbstoffabspalter in der nicht komplexierten Form nicht nur nach kürzeren Wellenlängen verschoben sind, sondern vor allem stark verminderte Extinktionswerte aufweisen.

Die Formel II und die Formel III (X = H) beziehen sich auf die erfindungsgemäßen bei der Entwicklung freigesetzten diffusionsfähigen Farbstoffe. Diese werden freigesetzt aus entsprechenden eingelagerten nichtdiffundierenden farbgebenden Verbindungen (Farbabspalter). Hierbei handelt es sich um Verbindungen, in denen ein Farbstoffrest gemäß Formel II über den Substituenten L an einen mindestens eine Ballastgruppe enthaltenden Trägerrest gebunden ist. Die Anknüpfung des Farbstoffrestes an den Trägerrest sei am Beispiel der Farbstoffe der Formel III (X = H) erläutert; im Falle der entsprechenden Farbabspalter steht in dieser Formel X für CAR, wobei CAR einen mindestens eine diffusionsfestmachende Gruppe enthaltenden Trägerrest bedeutet. Je nach ihrer Funktionsweise können die Trägerreste unterschiedliche Strukturen aufweisen.

Bei den erfindungsgemäßen Farbabspaltern kann es sich beispielsweise um nichtdiffundierende Farbkuppler handeln, die in der Kupplungsstelle einen Farbstoffrest gemäß der vorliegenden Erfindung tragen und diesen als Folge einer chromogenen Kupplung in Freiheit setzen. Derartige Abspaltmechanismen sind beispielsweise in DE-PS 1 095 115 und in US 3 227 550 beschrieben.

Als besonders vorteilhaft erweisen sich jedoch redoxaktive Farbabspalter der Formel

BALLAST — REDOX — FARBSTOFF

worin bedeuten

BALLAST eine diffusionsfestmachende Gruppe
REDOX eine Gruppe, die unter den Bedingungen der alkalischen Entwicklung oxidierbar oder reduzierbar ist und, je nachdem, ob sie im oxidierten oder im reduzierten Zustand vorliegt, in unterschiedlichem Ausmaß einer Eliminierungsreaktion, einer nukleophilen Verdrängungsreaktion oder einer Hydrolyse unterliegt mit der Folge, daß der Rest FARBSTOFF abgespalten wird
FARBSTOFF den Rest eines diffusionsfähigen Farbstoffes, im vorliegenden Fall eines Farbstoffes gemäß Formel II.

Als diffusionsfestmachende Reste sind solche Reste anzusehen, die es ermöglichen, die erfindungsgemäßen Farbabspalter in den üblicherweise bei fotografischen Materialien verwendeten hydrophilen Kolloiden diffusionsfest einzulagern. Hierzu sind vorzugsweise organische Reste geeignet, die im allgemeinen geradkettige oder verzweigte aliphatische Gruppen mit im allgemeinen 8 bis 20 C-Atomen und gegebenenfalls auch carbocyclische oder heterocyclische gegebenenfalls aromatische Gruppen enthalten. Mit dem übrigen Molekülteil sind diese Reste entweder direkt oder indirekt, z. B. über eine der folgenden Gruppen verbunden: $-NHCO-$, $-NHSO_2-$, $-NR-$, wobei R Wasserstoff oder Alkyl bedeutet, $-O-$ oder $-S-$. Zusätzlich kann der diffusionsfestmachende Rest auch wasserlöslichmachende Gruppen enthalten, wie z. B. Sulfogruppen oder Carboxylgruppen, die auch in anionischer Form vorliegen können. Da die Diffusionseigenschaften von der Molekülgröße der verwendeten Gesamtverbindung abhängen, genügt es in bestimmten Fällen, z. B. wenn das verwendete Gesamtmolekül groß genug ist, als »diffusionsfestmachende Reste« auch kürzerkettige Reste zu verwenden.

Redoxaktive Trägerreste CAR der Struktur BALLAST-REDOX- und entsprechende Farbabspalter sind in den verschiedensten Ausführungsformen bekannt.

Oxidierbare Farbabspalter, die nach Oxidation einer Hydrolyse unterliegen unter Freisetzung eines diffusionsfähigen Farbstoffes, sind beispielsweise beschrieben in: DE-OS 2 242 762, DE-OS 2 406 664, DE-OS 2 505 246, DE-OS 2 613 005, DE-OS 2 645 656 und folgenden Research Disclosure Publikationen: Nr. 15 157 (November 1976), Nr. 15 654 (April 1977), Nr. 17 736 (Januar 1979). Hierbei handelt es sich überwiegend um Verbindungen, in denen ein Farbstoffrest über eine Sulfonamidgruppe an einen oxidierbaren Trägerrest gebunden ist; der bei der Entwicklung freigesetzte Farbstoff weist dementsprechend eine Sulfamoylgruppe auf.

Oxidierbare Farbabspalter, die in oxidierter Form einer intramolekularen Verdrängungsreaktion unterliegen unter Freisetzung eines diffusionsfähigen Farbstoffes, sind beispielsweise Gegenstand von US 3 443 940. Aus diesen Farbabspaltern werden Farbstoffe mit Sulfinatgruppen freigesetzt.

Beispiele für oxidierbare Trägerreste, von denen in oxidierter Form ein daran gebundener Farbstoffrest abgespalten wird, sind im folgenden aufgeführt:

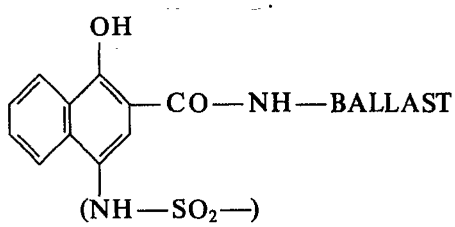

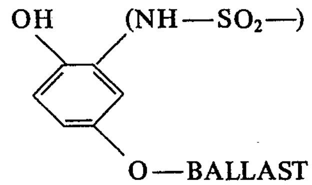

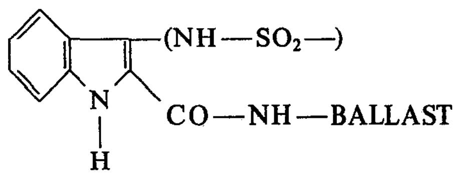

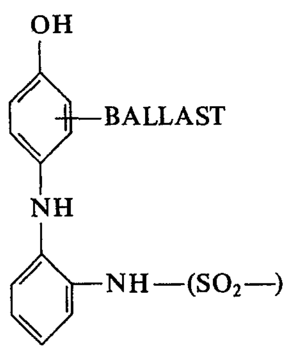

Die in Klammern eingeschlossenen Gruppen werden zusammen mit dem Farbstoffrest abgespalten; sie verbleiben als funktionelle Gruppen in Form des Substituenten L oder eines Bestandteiles desselben beim Farbstoff, an den sie dementsprechend entweder direkt oder über ein Zwischenglied gebunden sind.

Bei den bisher genannten Farbabspaltertypen werden die Farbstoffreste proportional zur Bildungsrate eines Oxidationsproduktes durch Entwicklung von Silberhalogenid oder durch katalytische Verstärkung, z. B. mit $H_2O_2$, abgespalten. Dieses Prinzip arbeitet daher als Negativverfahren und bedarf zur Herstellung positiver Bildung einer Umkehrung, z. B. durch Verwendung direktpositiver Emulsionen oder durch eine nach dem Prinzip der Silbersalzdiffusion arbeitende Schichtanordnung.

Es ist besonders vorteilhaft, wenn der eine Ballastgruppe und einen Redoxteil aufweisende Trägerrest so aufgebaut ist, daß der diffusionsfähige Azofarbstoff annähernd umgekehrt proportional zum Entwicklungszustand der Silberhalogenidschicht unter alkalischen Bedingungen freigesetzt wird. In diesem Fall handelt es sich um ein von vorneherein positiv arbeitendes System, das zur Herstellung positiver Bilder unter Verwendung herkömmlicher negativer Silberhalogenidemulsionen geeignet ist. Derartige Farbabspalter sind ebenfalls bekannt und werden im folgenden beschrieben.

Oxidierbare Farbabspalter, die in oxidierter Form stabil sind, jedoch in reduzierter Form einer intramolekularen nukleophilen Verdrängungsreaktion unterliegen unter Abspaltung eines Farbstoffrestes, sind beispielsweise Gegenstand von DE-OS 2 402 900 und DE-OS 2 543 902.

Oxidierbare Farbabspalter, die in oxidierter Form stabil sind, jedoch in reduzierter Form den Farbstoff in einer Eliminierungsreaktion freisetzen, sind beschrieben in DE-OS 2 823 159 und DE-OS 2 854 946.

Die Wirkungsweise der beiden zuletzt genannten Gruppen von Farbabspaltern läßt sich umkehren, wenn derartige Verbindungen nicht in reduzierter Form, sondern in oxidierter Form eingesetzt werden. Auf diese Weise kommt man zu den im folgenden erwähnten Farbabspaltertypen.

Reduzierbare Farbabspalter, die nach Reduktion einer intramolekularen nukleophilen Verdrängungsreaktion unter Freisetzung eines Farbstoffrestes unterliegen, sind Gegenstand der DE-OS 2 809 716. Diese Verbindungen werden als sogenannte BEND-Verbindungen bezeichnet (BEND = »Ballasted Electron-accepting Nucleophilic Displacement«).

Reduzierbare Farbabspalter, die nach Reduktion einer Eliminierungsreaktion unterliegen unter Freisetzung eines Farbstoffes, sind Gegenstand von EP-A 0 004 399 und GB-A 8 012 242.

Weitere Klassen von reduzierbaren Farbabspaltern, die nach ähnlichen Reaktionsweisen reduktiv spaltbar sind unter Freisetzung von Farbstoffen, sind Gegenstände von DE-OS 3 008 588 und DE-OS 3 014 669.

Beispiele für reduzierbare Trägerreste, von denen ein daran gebundener Farbstoffrest reduktiv abgespalten wird, sind im folgenden aufgeführt.

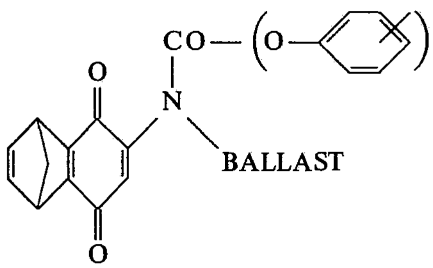

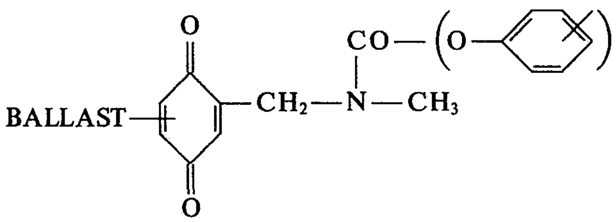

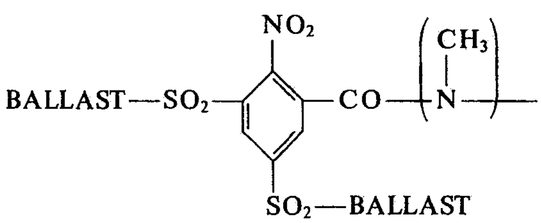

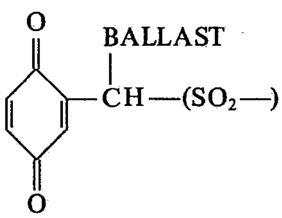

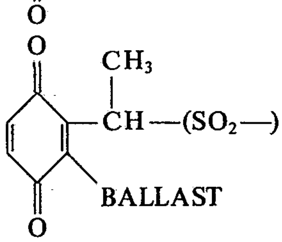

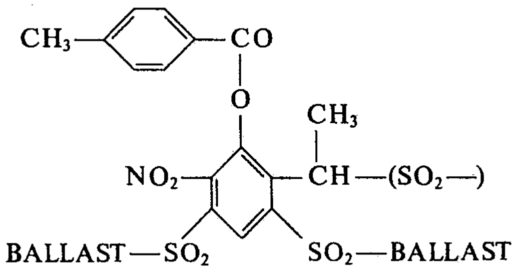

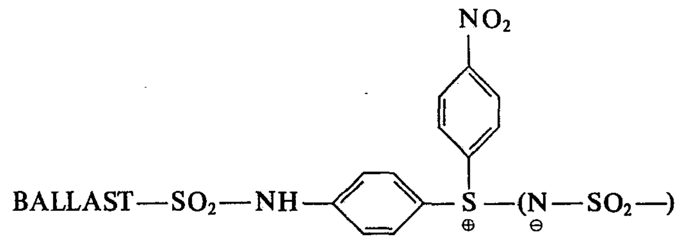

Die in den Klammern eingeschlossenen Gruppen sind funktionelle Gruppen des Farbstoffrestes und werden als Substituent L oder Bestandteil desselben zusammen mit dem Farbstoff vom zurückbleibenden Teil des Trägerrestes abgetrennt. Die funktionelle Gruppe kann einen unmittelbaren Einfluß auf die Absorptions- und Komplexbildungseigenschaften der erfindungsgemäßen Farbstoffe der Formel II ausüben; sie kann andererseits aber auch von dem Chromophor des erfindungsgemäßen Farbstoffes durch ein Zwischenglied getrennt sein, indem sie in dem Substituenten L enthalten ist, ohne daß hierdurch ein Einfluß auf die Absorptions- und Komplexbildungseigenschaften wirksam werden müßte. Die funktionelle Gruppe kann jedoch gegebenenfalls zusammen mit dem Zwischenglied von Bedeutung sein für das Diffusions- und Beizverhalten der erfindungsgemäßen Farbstoffe. Geeignete Zwischenglieder sind beispielsweise Alkylen-, Arylen- und Phenylsulfamoylgruppen.

Die zuletzt erwähnten Klassen von reduzierbaren, reduktiv spaltbaren Farbabspaltern werden zweckmäßigerweise zusammen mit sogenannten Elektronendonorverbindungen (ED-Verbindungen) verwendet. Letztere wirken als Reduktionsmittel, das bei der Entwicklung des Silberhalogenids bildmäßig verbraucht wird und mit seinem nicht verbrachten Anteil seinerseits den zugeordneten Farbabspalter reduziert und dadurch die Abspaltung des Farbstoffes bewirkt. Geeignete ED-Verbindungen sind beispielsweise nicht oder nur wenig diffundierende Derivate des Hydrochinons, des Benzisoxazolons, des p-Aminophenols oder der Ascorbinsäure (z. B. Ascorbylpalmitat), die beispielsweise in DE-OS 2 809 716 beschrieben sind. Besonders günstige ED-Verbindungen sind Gegenstand der DE-OS 3 006 268.

Beispiele geeigneter ED-Verbindungen sind im folgenden aufgeführt.

ED 1

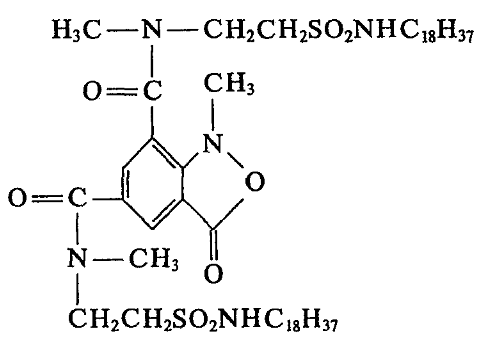

ED 2

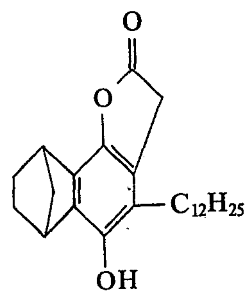

ED 3

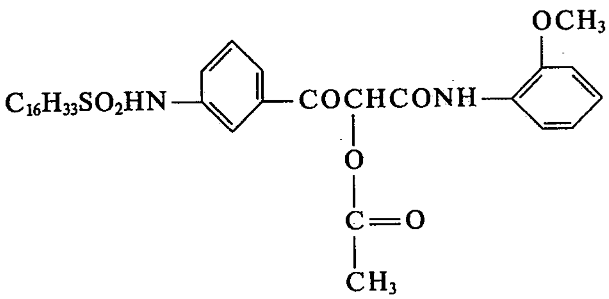

ED 4

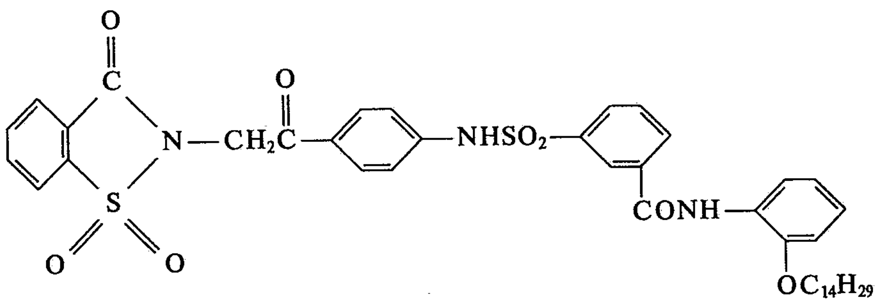

ED 5

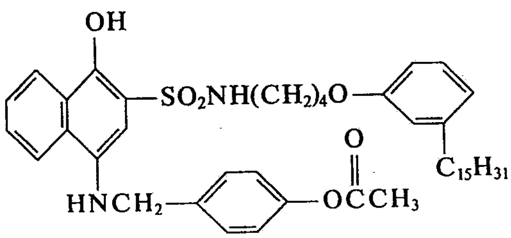

ED 6

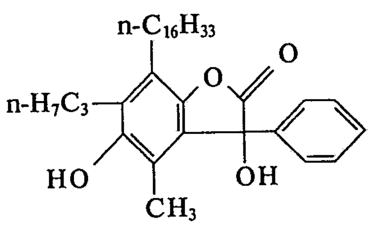

ED 7

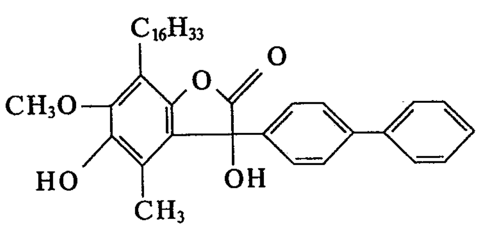

Beispiele für erfindungsgemäße, zu gelben Nickel- oder Kupferkomplexen mit besonders günstiger Lichtechtheit metallisierbaren Monoazofarbstoffe der Formel II sind im folgenden aufgeführt.

Farbstoffe:

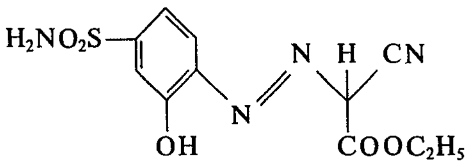

Farbstoff 1

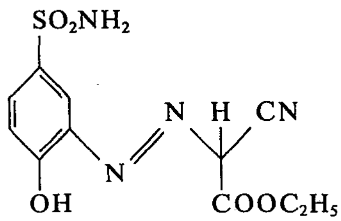

Farbstoff 2

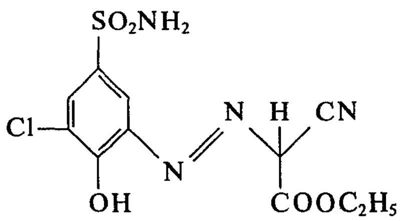

Farbstoff 3

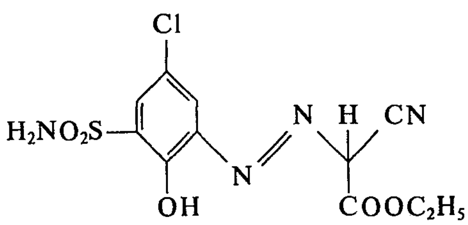

Farbstoff 4

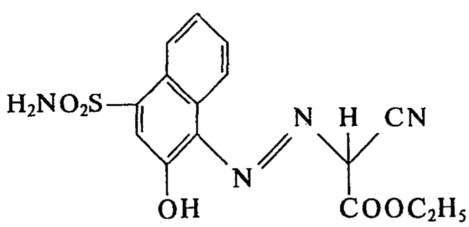

Farbstoff 5

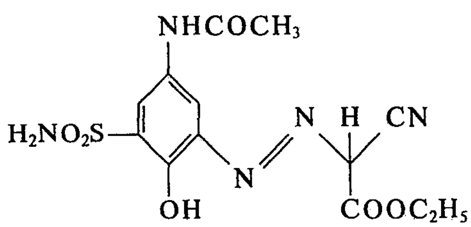

Farbstoff 6

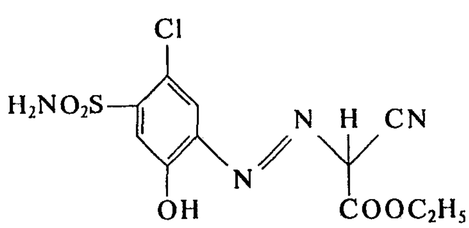

Farbstoff 7

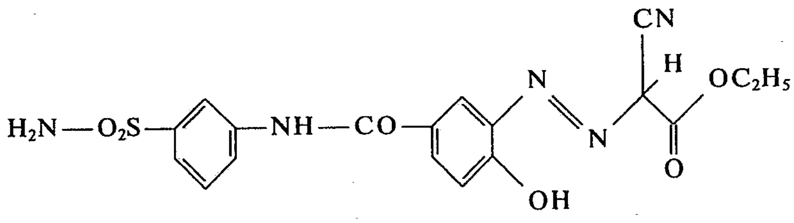

Farbstoff 8

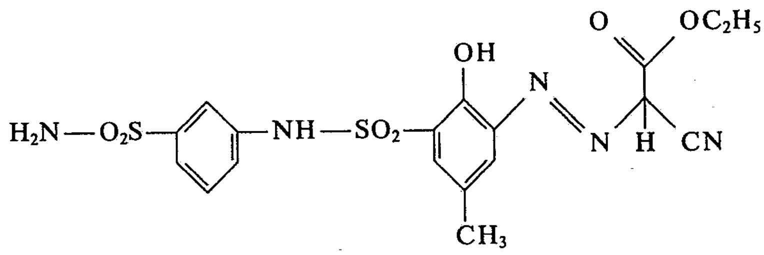

Farbstoff 9

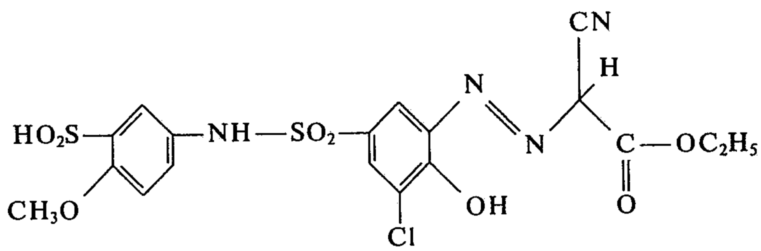

Farbstoff 10

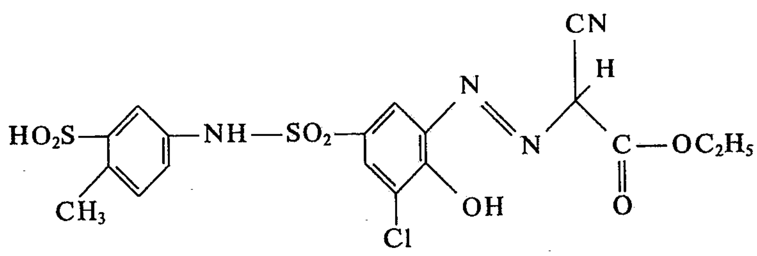

Farbstoff 11

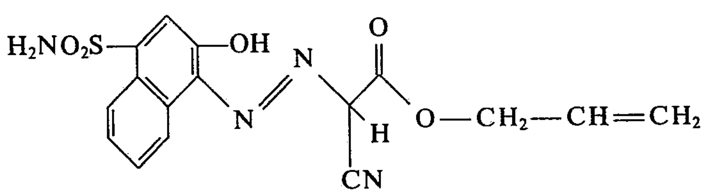

Farbstoff 12

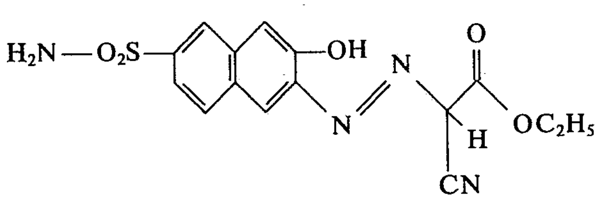

Farbstoff 13

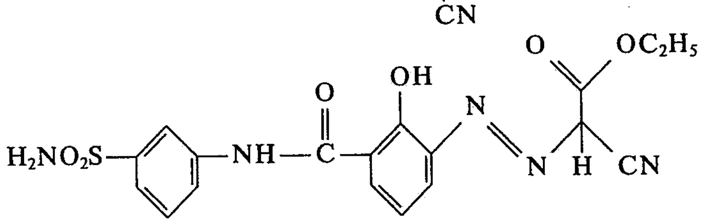

Farbstoff 14

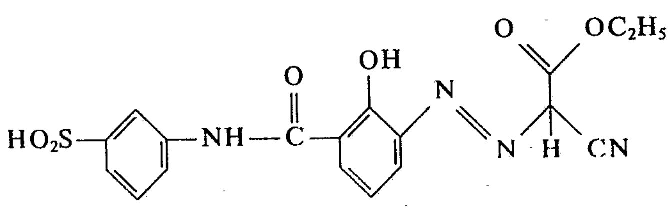

Farbstoff 15

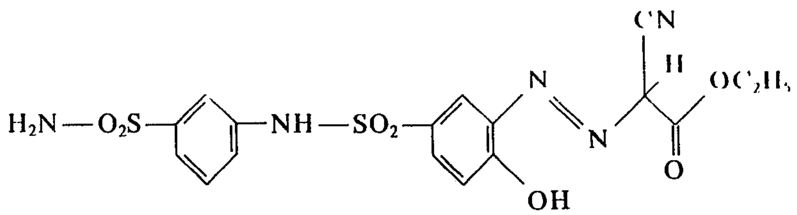

Farbstoff 16

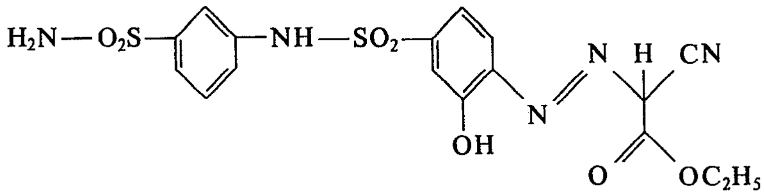

Farbstoff 17

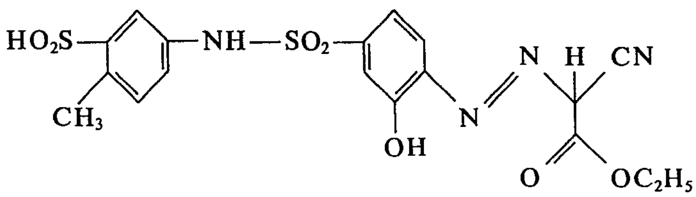

Farbstoff 18

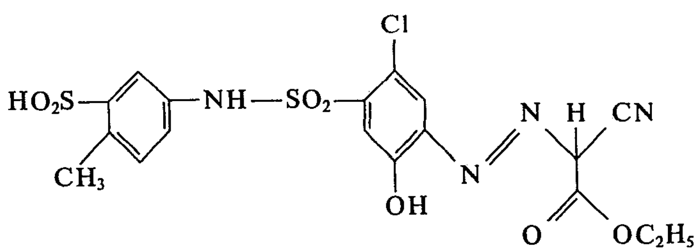

Farbstoff 19

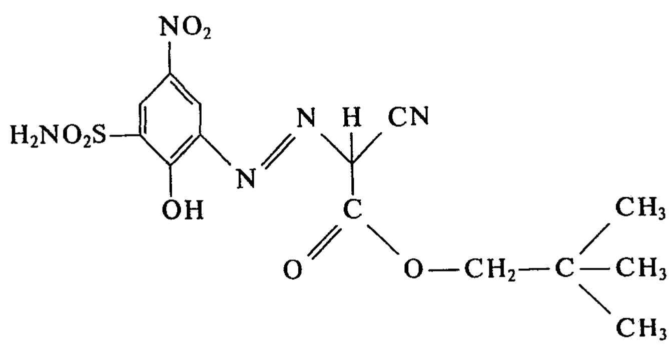

Farbstoff 20

Für die Herstellung der erfindungsgemäßen Farbabspalter mit nachkomplexierbarem Arylazocyanessigesterchromophor eignen sich als Ausgangsmaterialien alle niedrigen Cyanessigester, z. B. der Methyl-, Ethyl-, n-Propyl-, Isopropyl-, n-Butyl-, sek.-Butyl-, Isobutylester, alle Pentylester einschließlich des Neopentylesters und des Cyclopentylesters, weiterhin der Hydroxyethylester, Hydroxypropylester, 2-Methoxyethylester, Phenethylester, Benzylester, Phenoxyethylester, Cyanethylester.

Als Diazokomponenten eignen sich grundsätzlich alle 2-Aminophenole mit verknüpfbaren Gruppen, z. B. mit einer Amino-, Carboxyl- oder Sulfogruppe. Sie können gegebenenfalls bereits bei der Diazotierung mit dem redoxaktiven Trägerrest verknüpft sein, d. h. als sogenannte Carrier-aminophenole vorliegen.

Die Verknüpfung mit dem Trägerrest kann aber auch nach der Diazotierung durchgeführt werden. Eine verknüpfbare Carboxyl- bzw. Sulfogruppe kann beispielsweise vor oder nach der Diazotierung und Azokupplung in bekannter Weise in die entsprechende Säurechloridgruppe überführt und anschließend mit einer Aminogruppe eines aminogruppenmodifizierten Trägerrestes oder eines Zwischengliedes umgesetzt werden. Das Zwischenglied kann dann bereits mit dem redoxaktiven Trägerrest verbunden sein oder in einer Folgereaktion mit jenem verbunden werden.

Die Verknüpfung kann auch über eine Acylaminogruppe erfolgen, wobei die Acylgruppe vom Trägerrest oder einem Zwischenglied bereitgestellt wird und die Aminogruppe am Aminophenolgerüst haftet.

Für die Zwecke der Erfindung besonders bevorzugt sind die Carrier-Aminophenole mit einer Sulfamoyl-Verknüpfung. Ein typischer Vertreter dieser Substanzklasse ist eine Verbindung der Formel:

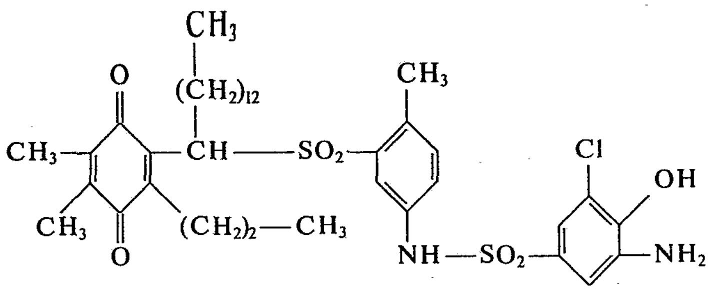

Die erfindungsgemäßen 2-Hydroxyarylazocyanessigestersulfonsäuren sind so stabil, daß sie zur Herstellung der Farbabspalter in begrenzt haltbare Sulfochloride übergeführt werden können, ohne daß die phenolische OH-Gruppe maskiert werden muß. Die Methoden dafür sind bekannt und bedürfen keiner näheren Erläuterung. Ein typisches Farbstoffsulfochlorid für die Verwendung gemäß der Erfindung ist eine Verbindung der Formel:

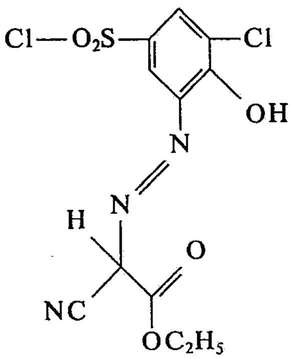

Die Herstellung der erfindungsgemäßen Farbstoffe und Farbabspalter wird nachstehend in einigen typischen Beispielen beschrieben.

Farbstoff 1

18,8 g 2-Aminophenol-5-sulfonamid wurden in 150 ml 5 n Salzsäure mit 7 g $NaNO_2$ bei 5° C in üblicher Weise diazotiert. Die mit Harnstoff von Nitrit befreite Diazoniumlösung wurde unter Rühren bei 0—5° C auf 12 g Cyanessigsäureethylester und 100 g $K_2CO_3$ in 200 ml Wasser getropft, wobei der pH-Wert durch 10%ige Natronlauge auf ca. 11—12 gehalten wurde. Nach Stehen über Nacht wurde mit Essigsäure auf pH = 5 gestellt und abgesaugt. Die Reinigung erfolgte durch Dispergieren mit 40%iger Essigsäure.

Farbabspalter 1

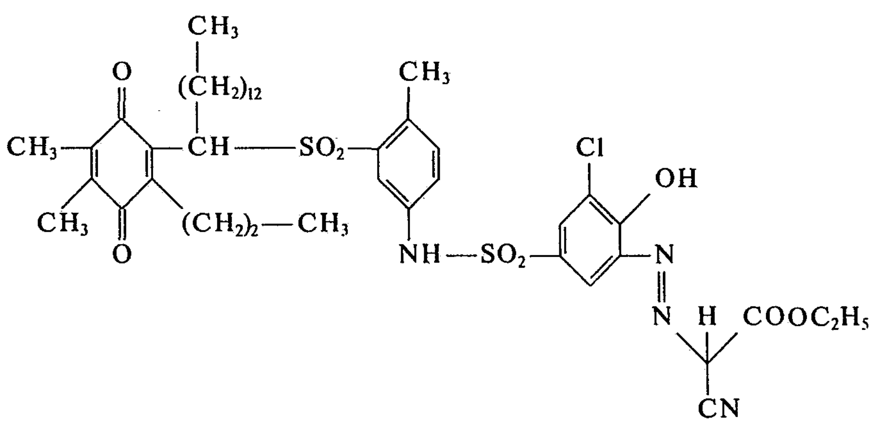

a) 2,3-Dimethyl-5-propyl-6-[α-(2-methyl-5-aminobenzolsulfonyl)-tetradecyl]-benzochinon-1,4

Zu 19,6 g 2,3-Dimethyl-5-propyl-6-α-hydroxytetradecyl-hydrochinon (dessen Herstellung in der veröffentlichten europäischen Patentanmeldung 0 004 399 beschrieben ist) und 11,1 g 2-Methyl-5-amin-

obenzolsulfinsäure in 300 ml Eisessig tropft man unter Rühren 30 ml 20%ige Schwefelsäure. Man hält 15 min auf 60°C, gibt 30 g Eisen-III-chloridhexahydrat zu und hält weitere 20 min auf 60°C. Man rührt in 300 ml Wasser und saugt nach eingetretener Kristallisation ab. Man wäscht mit Wasser nach, digeriert mit heißem Methanol, saugt erneut ab und trocknet im Vakuum. Ausbeute 28 g.

b) 3-Acetamino-4-acetoxy-5-chlorbenzolsulfonsäure

150 g 3-Amino-4-hydroxy-5-chlorbenzolsulfonsäure wurden in 500 ml Acetanhydrid durch zweistündiges Erwärmen am Dampfbad in Gegenwart von 2 ml $H_2SO_4$ acetyliert, nach Erkalten abgesaugt und mit Aceton gewaschen. Ausbeute 156 g.

c) 7-Chlor-2-methylbenzoxazol-5-sulfochlorid

100 g Vorstufe b wurden mit 150 g $PCl_5$ vermengt und 150 min bei 60—65°C gerührt. Das verflüssigte Gemisch wurde auf 2000 g Eis ausgetragen, abgesaugt, mehrmals mit Eiswasser gewaschen, erneut abgesaugt und getrocknet. Ausbeute 81 g.

d) 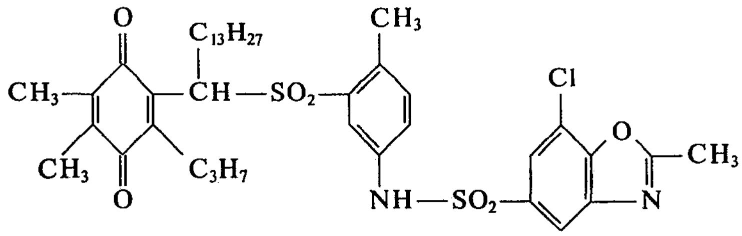

33 g Vorstufe a wurden in 400 ml Dichlormethan nach Zugabe von 22 ml Pyridin mit der Lösung von 20 g Vorstufe c in 200 ml Dichlormethan umgesetzt. Nach 6 h Rührzeit bei Raumtemperatur wurden weitere 5 g Vorstufe c in 50 ml Dichlormethan nachgegeben. Das Reaktionsgemisch wurde über Nacht stehengelassen, eingedampft und dreimal digeriert mit je 100 ml Wasser. Ausbeute 68 g feste Substanz.

e) 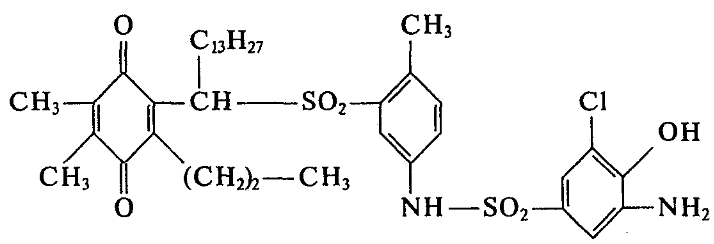

68 g Vorstufe d wurden mit 350 ml Ethanol und 30 ml 37%iger Salzsäure 1 h unter Rückfluß gehalten, danach abgekühlt, von Ungelösten abfiltriert, eingeengt und in 2000 ml Eiswasser eingetragen. Nach Stehen über Nacht wurde vom festen Rückstand abdekantiert, mit Wasser nachgewaschen und getrocknet. Ausbeute 45 g.

f) 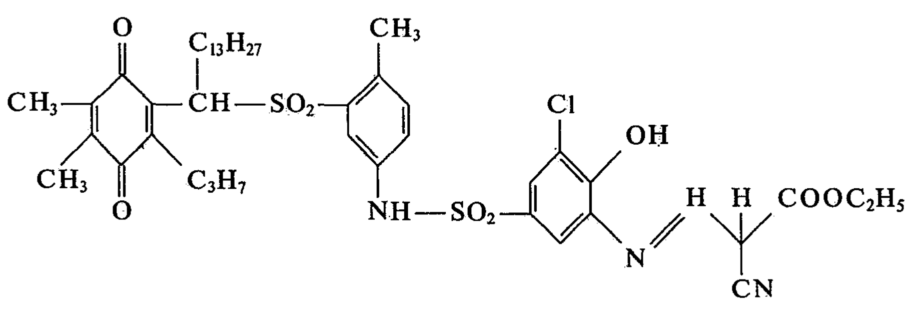

7,2 g Vorstufe e wurden in 72 ml Aceton nach Zugabe von 1,5 ml $H_2SO_4$ (98%ig) bei −10 bis −5°C mit 1,6 ml Nitrosylschwefelsäure diazotiert. Anschließend wurde 60 min bei 0°C weitergerührt und in eine Suspension aus 2 g Cyanessigester und 9 g Kaliumcarbonat in 30 ml Aceton eingetragen. Das Gemisch wurde über Nacht weitergerührt, in 400 ml Wasser eingetragen und bis zum Erstarren digeriert, dekantiert, in Dichlormethan aufgenommen und über Kieselgel chromatographiert. Ausbeute: 6,7 g braungelbe Flocken.

Farbabspalter 2

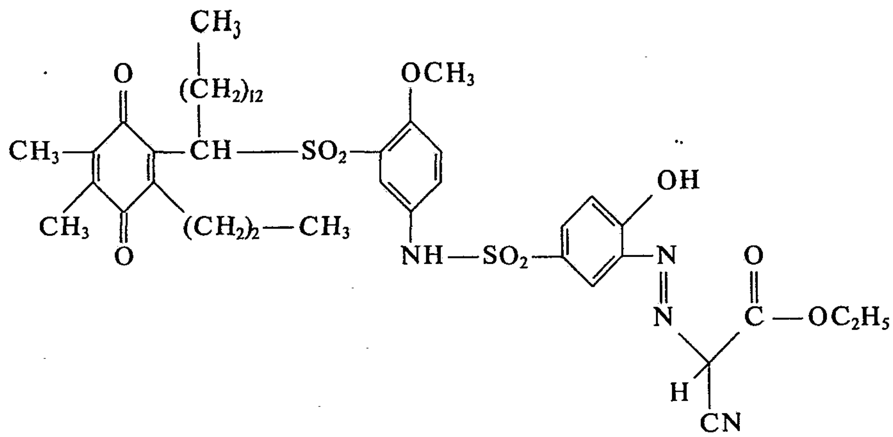

g) 2,3-Dimethyl-5-n-propyl-6-[α-(2-methoxy-5-aminophenylsulfonyl)-tetradecyl]-benzochinon-1,4

Herstellung analog Vorstufe a aus 2,3-Dimethyl-5-n-propyl-6-(α-hydroxytetradecyl)-benzochinon-1,4 und 2-Methoxy-5-aminobenzolsulfinsäure; Ausbeute quantitativ, braungelbes Öl.

h) 2-Benzoyloxy-5-chlorsulfonylphenylazo-cyanessigsäureethylester

Herstellung aus der benzoylierten Farbstoff-Sulfosäure mit $PCl_5$, braungelbe krümelige Masse.

i) Farbabspalter 2

Vorstufen g und h wurden in Dichlormethan unter Zugabe äquivalenter Mengen Pyridin bei 5—10°C vereinigt und nach 5 h in 10%ige Na-acetatlösung gegossen. Die Dichlormethanphase wurde mit Molekularsieb vorgetrocknet und über Kieselgel chromatographiert. Der Eindampfrückstand wurde erneut über Kieselgel chromatographiert.

Die dünnschichtchromatographische Kontrolle zeigt, daß die 1. Fraktion geringe Anteile an benzoylierter Verbindung enthält.

Farbabspalter 3

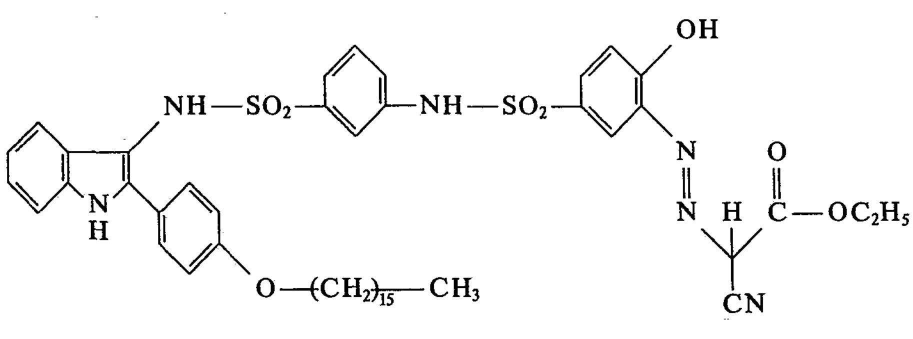

j) 2-(4-Cetyloxyphenyl)-3-(3-aminobenzolsulfonamido)-indol

Die Herstellung erfolgte aus 2-(4-Cetyloxyphenyl)-3-aminoindol (Angaben in DE-OS 2 505 248, S. 15, dort: Herstellung der farbgebenden Verbindung 4) durch Umsetzung mit 3-Nitrobenzolsulfochlorid und katalytische Reduktion.

Farbabspalter 3

Vorstufe j und Vorstufe h wurden in Dichlormethan bei Gegenwart der zweifachen molaren Menge Pyridin vereinigt. Man ließ unter $N_2$ über Nacht ausreagieren, gab 10%ige wäßrige Na-acetatlösung zu und rührte weitere 8 h.

Anschließend wurde die Dichlormethanphase abgetrennt, mit Molekularsieb (Bayer-Zeolit) getrocknet und über Kieselgel gereinigt. Die Hauptfraktion wurde isoliert und eingeengt: Blaßgelbes Pulver, Ausbeute 50%.

Die erfindungsgemäßen Farbabspalter werden in Zuordnung zu einer lichtempfindlichen Silberhalogenidemulsionsschicht einem farbfotografischen Aufzeichnungsmaterial für das Farbdiffusionsübertragungsverfahren einverleibt. Bei monochromatischen Verfahren enthält ein solches Aufzeichnungsmaterial mindestens eine, bei Verfahren zur Herstellung mehrfarbiger Bilder in der Regel mindestens drei lichtempfindliche Silberhalogenidemulsionsschichten, im letzteren Fall mit unterschiedlicher spektraler Empfindlichkeit, wobei erfindungsgemäß mindestens einer dieser Schichten ein Farbabspalter gemäß Formel III (X=CAR) zugeordnet ist. Die Farbabspalter liefern bei der Entwicklung diffusionsfähige farbschwache Gelbfarbstoffe, die nach Diffusion in eine Bildempfangsschicht mit Nickel- oder Kupferionen zu farbstarken gelben Bildfarbstoffen komplexiert werden. Die Farbabspalter der Erfindung sind daher bevorzugt einer blauempfindlichen Silberhalogenidemulsionsschicht zugeordnet.

Unter »Zuordnung« und »zugeordnet« wird verstanden, daß die gegenseitige Anordnung von lichtempfindlicher Silberhalogenidemulsionsschicht und Farbabspalter von solcher Art ist, daß bei der Entwicklung eine Wechselwirkung zwischen ihnen möglich ist, die eine Freisetzung des diffusionsfähigen, durch Metallionen komplexierbaren Azofarbstoffes als Funktion der Entwicklung der Silberhalogenidemulsionsschicht zuläßt. Hierzu müssen das lichtempfindliche Silberhalogenid und der Farbabspalter nicht notwendigerweise in derselben Schicht vorliegen; sie können auch in benachbarten Schichten untergebracht sein, die jeweils der gleichen Schichteinheit angehören.

Falls es sich bei den erfindungsgemäßen Farbabspaltern um reduzierbare, reduktiv spaltbare Verbindungen handelt, die zweckmäßig gemeinsam mit ED-Verbindungen (oder deren Vorläufer, z. B. gemäß DE-OS 30 06 268) verwendet wurden, ist unter Zuordnung zu verstehen, daß die gegenseitige Anordnung von Silberhalogenidemulsionen, ED-Verbindung bzw. ED-Vorläuferverbindung und Farbabspalter von solcher Art ist, daß eine Wechselwirkung zwischen ihnen möglich ist, die eine bildmäßige Übereinstimmung zwischen dem gebildeten Silberbild und dem Verbrauch an ED-Verbindung einerseits sowie zwischen der nicht verbrauchten ED-Verbindung und dem Farbabspalter andererseits zuläßt, so daß in Übereinstimmung mit dem nicht entwickelten Silberhalogenid eine bildweise Verteilung von diffusionsfähigem Farbstoff erzeugt wird.

Obwohl für die Einarbeitung der erfindungsgemäßen Farbabspalter die verschiedensten Methoden in Frage kommen, hat es sich als günstig erwiesen, die Farbabspalter der vorliegenden Erfindung in Form von Emulgaten unter Verwendung von sogenannten Ölbildnern in die Schichten einzuverleiben. Insbesondere bei Verwendung von reduzierbaren, reduktiv spaltbaren Farbabspaltern in Kombination mit ED-Verbindungen bietet dies den Vorteil, daß Farbabspalter und ED-Verbindungen in Form eines gemeinsamen Emulgates in besonders engen funktionellen Kontakt gebracht werden können. Geeignete Ölbildner sind beispielsweise beschrieben in US 2 322 027, DE-OS 1 772 192, DE-OS 2 042 659 und DE-OS 2 049 689. Die optimalen Mengen des einzuarbeitenden Farbabspalters und gegebenenfalls der ED-Verbindung können durch einfache routinemäßige Tests ermittelt werden. Die Farbabspalter der vorliegenden Erfindung werden beispielsweise in Mengen von 0,05—0,2 Mol und die ED-Verbindungen, falls vorhanden, in Mengen von 0,1—0,6 Mol pro Mol Silberhalogenid verwendet.

Die Entwicklung des bildmäßig belichteten erfindungsgemäßen farbfotografischen Aufzeichnungsmaterials wird durch Behandlung mit einer wäßrig-alkalischen, gegebenenfalls hochviskosen Entwicklerlösung eingeleitet. Die für die Entwicklung erforderlichen Hilfsentwicklerverbindungen sind entweder in der Entwicklerlösung enthalten oder können ganz oder teilweise auch in einer oder mehreren Schichten des erfindungsgemäßen farbfotografischen Aufzeichnungsmaterials enthalten sein. Bei der Entwicklung werden aus den Farbabspaltern bildmäßig diffusionsfähige Farbstoffe freigesetzt und auf eine Bildempfangsschicht übertragen, die entweder integraler Bestandteil des erfindungsgemäßen farbfotografischen Aufzeichnungsmaterials ist oder sich mit jenem zumindest während der Entwicklungszeit in Kontakt befindet. Die Bildempfangsschicht kann demnach auf dem gleichen Schichtträger angeordnet sein wie das lichtempfindliche Element oder auf einem separaten Schichtträger. Sie besteht im wesentlichen aus einem Bindemittel, das Beizmittel für die Festlegung der aus den nichtdiffundierenden Farbabspaltern freigesetzten diffusionsfähigen Farbstoffe enthält. Als Beizmittel für anionische Farbstoffe dienen vorzugsweise langkettige quaternäre Ammonium- oder Phosphoniumverbindungen, z. B. solche, wie sie beschrieben sind in US 3 721 147 und US 3 271 148. Ferner können auch bestimmte Metallsalze und deren Hydroxide, die mit den sauren Farbstoffen schwerlösliche Verbindungen bilden, verwandt werden. Weiterhin sind hier auch polymere Beizmittel zu erwähnen, wie etwa solche, die in DE-OS 2 315 304, DE-OS 2 631 521 oder in der deutschen Patentanmeldung P 2 941 818.6 beschrieben sind. Die Farbstoffbeizmittel sind in der Beizmittelschicht in einem der üblichen hydrophilen Bindemittel gelöst oder dispergiert, z. B. in Gelatine, Polyvinylpyrrolidon, ganz oder partiell hydrolysierten Celluloseestern. Selbstverständlich können auch manche Bindemittel als Beizmittel fungieren, z. B. Polymerisate von N-Methyl-2-vinylpyridin, wie beispielsweise beschrieben in US 2 484 430. Weitere brauchbare beizende Bindemittel sind beispielsweise Guanylhydrazonderivate von Alkylvinylketonpolymerisaten, wie beispielsweise beschrieben in der US 2 882 156, oder Guanylhydrazonderivate von Acylstyrol-polymerisaten, wie beispielsweise beschrieben in der DE-OS

2 009 498. Im allgemeinen wird man jedoch den zuletzt genannten beizenden Bindemitteln andere Bindemittel, z. B. Gelatine, zusetzen.

Darüber hinaus kann im vorliegenden Fall die Bildempfangsschicht oder eine hierzu benachbarte Schicht Schwermetallionen, insbesondere Kupfer- oder Nickelionen, enthalten, die mit den eindiffundierenden Tridentat-Azofarbstoffen der Erfindung die entsprechenden Azofarbstoff-Metall-Komplexe bilden mit den erwähnten vorteilhaften Eigenschaften hinsichtlich Absorption und Stabilität. Die Metallionen können in der Bildempfangsschicht in komplex gebundener Form vorliegen, z. B. gebunden an bestimmte Polymerisate, wie etwa beschrieben in Research Disclosure 18 534 (Sept. 1979) oder in DE-OS 3 002 287 und DE-OS 3 105 777. Es ist aber auch möglich, die Azofarbstoff-Metall-Komplexe nach erfolgter Diffusion in der Bildempfangsschicht dadurch zu erzeugen, daß die Bildempfangsschicht mit der darin entstandenen bildmäßigen Verteilung an erfindungsgemäßen Farbstoffen mit einer Lösung eines Salzes eines der genannten Schwermetalle behandelt wird. Auch die bei der Entwicklung in Zuordnung zu den ursprünglich lichtempfindlichen Schichten bildmäßig (als Negativ zu dem Übertragsbild) zurückbleibenden Farbabspalter der Formel III (X = CAR) können durch Behandlung mit Schwermetallionen in die entsprechenden Azofarbstoff-Metall-Komplexe überführt werden (»retained image«). In jedem Fall besteht das mit dem erfindungsgemäßen farbfotografischen Material erzeugte Farbbild aus einer bildmäßigen Verteilung von Metallkomplexen in einer Bindemittelschicht, insbesondere von Nickel- oder Kupferkomplexen der erfindungsgemäßen Farbabspalter der Formel III (X = CAR) oder der daraus freigesetzten Azofarbstoffe der Formel II sowie gegebenenfalls weiterer Farbstoffe. Im Falle der Herstellung eines Übertragsbildes handelt es sich bei der Bindemittelschicht um die Bildempfangsschicht, in der die übertragenen Farbstoffe als Metallkomplexe gegebenenfalls mittels der darin enthaltenen Beizmittel festgelegt sind, und im Falle der Herstellung eines sogenannten zurückgehaltenen Farbbildes liegt die bildmäßige Verteilung der aus den Farbabspaltern selbst gebildeten Metallkomplexe in einer Schicht des ursprünglich lichtempfindlichen Elements vor.

Sofern die Bildempfangsschicht auch nach vollendeter Entwicklung in Schichtkontakt mit dem lichtempfindlichen Element verbleibt, befindet sich zwischen ihnen in der Regel eine alkalidurchlässige pigmenthaltige lichtreflektierende Bindemittelschicht, die der optischen Trennung zwischen Negativ und Positiv und als ästhetisch ansprechender Bildhintergrund für das übertragene Farbbild dient. Eine solche lichtreflektierende Schicht kann in bekannter Weise bereits in dem lichtempfindlichen farbfotografischen Aufzeichnungsmaterial vorgebildet sein oder aber in ebenfalls bekannter Weise erst bei der Entwicklung erzeugt werden. Falls die Bildempfangsschicht zwischen Schichtträger und lichtempfindlichem Element angeordnet ist und von letzterem durch eine vorgebildete lichtreflektierende Schicht getrennt ist, muß entweder der Schichtträger transparent sein, so daß das erzeugte Farbübertragsbild durch ihn hindurch betrachtet werden kann, oder das lichtempfindliche Element muß mitsamt der lichtreflektierenden Schicht von der Bildempfangsschicht entfernt werden, um letztere freizulegen. Die Bildempfangsschicht kann aber auch als oberste Schicht in einem integralen farbfotografischen Aufzeichnungsmaterial vorhanden sein, in welch letzterem Fall die Belichtung zweckmäßigerweise durch den transparenten Schichtträger vorgenommen wird.

Anwendungsbeispiel 1

Bildempfangsblatt 1

Auf einen beidseitig mit Polyethylen beschichteten Papierträger wurden folgende Schichten aufgetragen. Alle Angaben beziehen sich auf 1 $m^2$.

1) Beizmittelschicht, enthaltend 6 g kationisches Polyurethan gemäß Beispiel 3 der DE-OS 2 631 521 und 5 g Gelatine.
2) Härtungsschicht, enthaltend 0,1 g Gelatine und 0,15 g Soforthärtungsmittel der Struktur

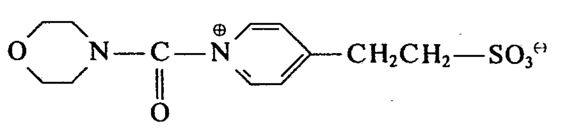

Je 2 Streifen des erhaltenen Bildempfangsmaterials wurden in 0,03molare, mit 2% Natronlauge alkalisch gestellte Lösungen der Farbstoffe 1, 2, 3, 4, 5, 6, 7, 8 eingetaucht, bis die getrocknete Schicht eine Dichte von mindestens 1,0, gemessen hinter Blaufilter, aufwies.

Außerdem wurden je zwei Streifen in einer auf gleicher Weise bereiteten Lösung einer der folgenden Farbstoffe eingefärbt:

Vergleichsfarbstoff A

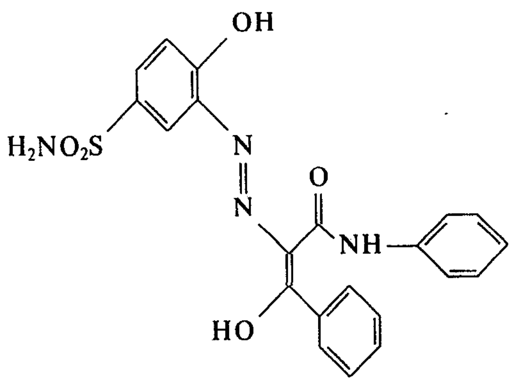

US-PS 4 148 643

Vergleichsfarbstoff B

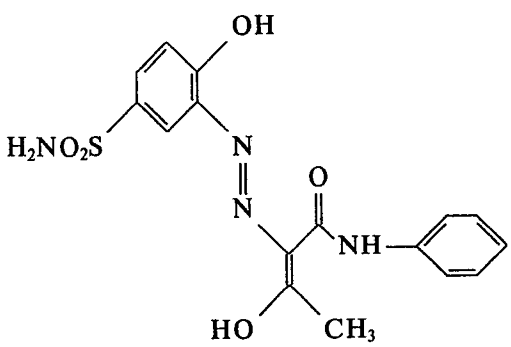

US-PS 4 148 643

Vergleichsfarbstoff C

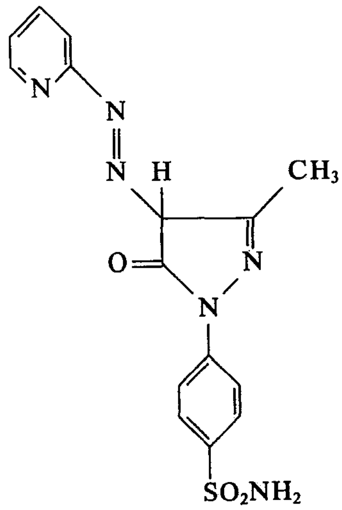

US-PS 4 148 641

Die Spektraleigenschaften der komplexierten Farbstoffe sind der folgenden Tabelle zu entnehmen.

Daten Nickelkomplexe

| Farbstoff | $\lambda_{max}$ (nm) | $\lambda_{HB}$ (nm) | Nebendichten hinter Grünfilter | Rotfilter | $\Delta F$ | $\frac{\Delta D}{D_0}$ |
|---|---|---|---|---|---|---|
| 1 | 440 | 500 | 17% | 6% | +100% | − 2% |
| 2 | 430 | 500 | 17% | 8% | +120% | − 3% |
| 3 | 436 | 492 | 13% | 6% | + 65% | − 6% |
| 4 | 420 | 496 | 30% | 17% | +160% | − 7% |
| 5 | 451 | 510 | 20% | 8% | + 51% | − |
| 6 | 420 | 490 | 30% | 20% | +175% | −15% |
| 7 | 436 | 492 | 19% | 9% | +190% | − 8% |
| 8 | 444 | 510 | 20% | 10% | + 80% | − 2% |
| A | 455 | 525 | 30% | | + 45% | −30% |
| B | 465 | 530 | 33% | | + 60% | −40% |
| C | 455 | 520 | 30% | | + 85% | − 2% |

In der 6. Spalte ist mit $\Delta F$ der Farbdichteanstieg bei Komplexierung angegeben nach folgender Definition:

$$\Delta F = \frac{D_{Ni\text{-}Komplex} - D_{Farbstoff}}{D_{Farbstoff}}.$$

Aus den Daten der Tabelle ist zu erkennen, daß die Farbstoffe der Erfindung durch Komplexierung

— auch ohne Maskierung (Acylierung) eine erhebliche Intensivierung der Farbstärke erfahren
— reinere und weniger verrötete Gelbtöne ergeben.

In der 7. Spalte ist die prozentuale Dichteabnahme der mit $Ni^{++}$ nachkomplexierten Farbüberträge nach Bestrahlung im Xenotestgerät eingetragen ($4{,}8 \cdot 10^6$ lux · h.; [$\Delta D/D_0$]).

Aus den Daten ist zu erkennen, daß die Nickelkomplexe der 2-Hydroxyphenylazocyanessigesterfarbstoffe überwiegend lichtechter sind als die Nickelkomplexe der Vergleichsfarbstoffe.

$\lambda_{HB}$ stellt die Lage der langwelligen Flanke dar, gekennzeichnet durch die Wellenlänge, bei der die Extinktion auf den halben Wert von $\lambda_{max}$ abgefallen ist.

## Anwendungsbeispiel 2

### Lichtempfindliches Element 1
(nicht erfindungsgemäß)

Auf einen beidseitig mit Polyethylen beschichteten Papierträger wurden nacheinander folgende Schichten aufgetragen. Alle Angaben beziehen sich auf 1 $m^2$.

1. Eine unsensibilisierte Silberbromidiodidemulsionsschicht aus 0,5 g $AgNO_3$ mit 0,3 g des nicht erfindungsgemäßen Farbabspalters A, 0,16 g ED-Verbindung 6 (= Verbindung 4 der DE-OS 3 006 268), 0,46 g Palmitinsäurediethylamid (gemeinsamer Ölbildner für Farbabspalter und ED-Verbindung) und 1,15 g Gelatine.
2. Eine Schutzschicht mit 0,6 g Monoacetylierungsprodukt von 4-Methyl-4-hydroxymethylphenidon, 0,12 g 2-Isooctadecyl-5-sulfohydrochinon und 0,6 g Gelatine.

3. Eine Härtungsschicht mit 0,1 g Gelatine und 0,12 g Soforthärtungsmittel, s. Beispiel 1.
Farbabspalter A = Chinon zu Verbindung 20 der EP-Anmeldung 0 004 399, entsprechend der Formel

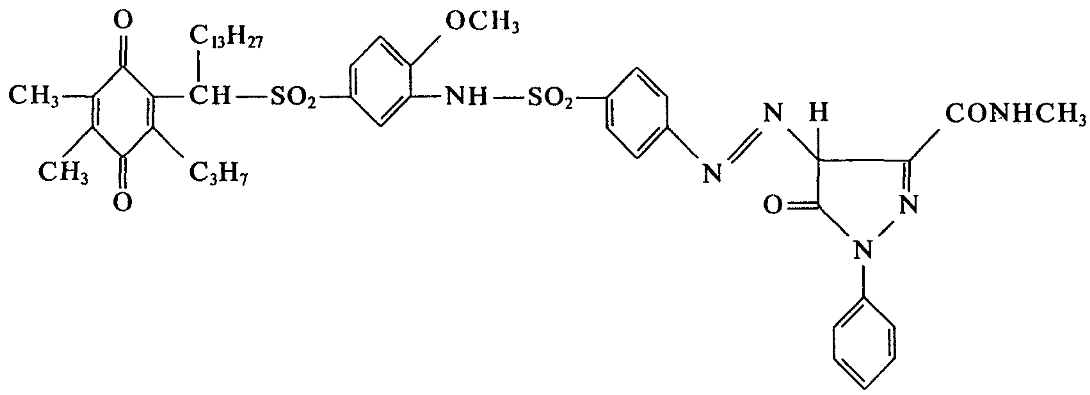

Das bildmäßig durch einen Stufenkeil belichtete lichtempfindliche Element und ein Streifen Bildempfangsblatt 1 (siehe Beispiel 1) wurden mit einer Behandlungslösung der nachfolgend angegebenen Zusammensetzung getränkt und schichtseitig zusammengepreßt:

925 g $H_2O$
30 g Isobutanol
2 g $Na_2SO_3$
3 g KBr
40 g KOH

Nach einer Kontaktzeit von 2 min wurden die Blätter voneinander getrennt und das Bildempfangsblatt 30 Sekunden gewässert. Nach der Trocknung wurden die $D_{min}/D_{max}$-Werte des positiven gelben Farbkeils 1 gemessen.

Lichtempfindliche Elemente 2 und 3
(erfindungsgemäß)

Die lichtempfindlichen Elemente 2 und 3 unterscheiden sich von Element 1 insofern, als

lichtempfindliches Element 2: 0,4 g Farbabspalter 1,
0,2 g ED-Verbindung 6 und
lichtempfindliches Element 3: 0,4 g Farbabspalter 2,
0,25 g ED-Verbindung 6

enthalten.
Außerdem enthielten die Emulgate anstelle von 0,46 g Palmitinsäurediethylamid jeweils 0,9 g Palmitinsäurediethylamid. Die Verarbeitung erfolgte wie im Fall des lichtempfindlichen Elements 1 im Kontakt mit Bildempfangsschicht 1. Nach dem Trennen werden die Bildempfangsschichten mit demineralisiertem Wasser abgespült und durch Eintauchen in 2%ige Nickelacetatlösung metallisiert. Anschließend werden sie durch ein Bernsteinsäurepufferbad (2% Bernsteinsäure, auf pH=6 gestellt) neutralisiert und getrocknet, anschließend werden die $D_{min}/D_{max}$-Werte bestimmt.

Die erhaltenen Farbkeile 1—3 werden halbseitig abgedeckt einer 48 h dauernden Xenonlichtbogen-Belichtung ausgesetzt (4,8 · $10^6$ l x h).

Lichtechtheits- und -fotografische Daten sind in der nachfolgenden Tabelle zusammengefaßt:

| Lichtempfindliches Element | Farbabspalter | $D_{min}$ | $D_{max}$ | E (rel. log I·t) | $\frac{\Delta D}{D_0}$ |
|---|---|---|---|---|---|
| 1 | A | 0,19 | 2,1 | 100 | —15% |
| 2 | 1 | 0,18 | 1,95 | 140 | — 2% |
| 3 | 2 | 0,16 | 1,85 | 125 | — 3% |

Aus den Daten ist zu erkennen, daß sowohl die erhöhte Empfindlichkeit aufgrund der niedrigen Extinktion der unmetallisierten Farbabspalter 1 und 2 als auch die erhöhte Lichtechtheit der Nickelkomplexe gegenüber einem konventionellen Gelbfarbstoff als technischer Vorteil zum Tragen kommen.

**Patentansprüche**

1. Farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung enthält, aus der unter den Bedingungen der alkalischen Entwicklung als Funktion der Entwicklung der Silberhalogenidemulsionsschicht ein diffusionsfähiger, durch Metallionen komplexierbarer Azofarbstoff freigesetzt wird, dadurch gekennzeichnet, daß der Azofarbstoff in einer seiner tautomeren Formen der folgenden Formel II entspricht:

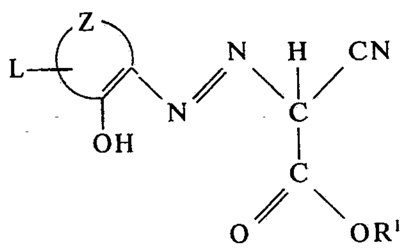

(II)

worin bedeuten

$R^1$ Alkyl, Alkenyl oder Cycloalkyl mit bis zu 8 C-Atomen;
Z einen Rest zur Vervollständigung eines Benzol- oder Naphthalinringes; und
L einen Substituenten mit einer Gruppe, die aus der Abspaltung von einem Trägerrest resultiert.

2. Aufzeichnungsmaterial nach Anspruch 1, dadurch gekennzeichnet, daß der diffusionsfähige, durch Metallionen komplexierbare Azofarbstoff der folgenden Formel entspricht

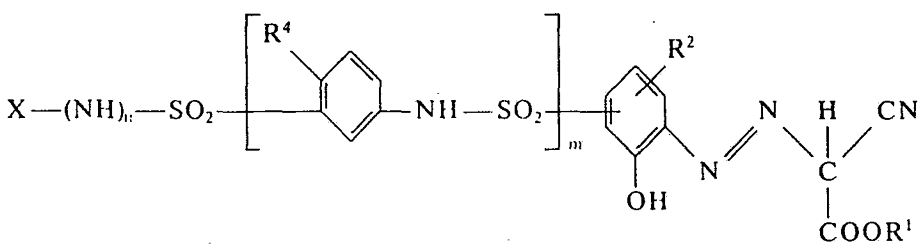

worin bedeuten

X H;
$R^1$ Alkyl, Alkenyl oder Cycloalkyl mit bis zu 8 C-Atomen;
$R^2$ H oder Cl;
$R^4$ H, Cl, $-CH_3$, $-OCH_3$ oder $-OC_2H_5$;
m 0 oder 1;
n 0 oder 1.

3. Fotografisch hergestelltes Farbbild, bestehend aus einer auf einem Schichtträger angeordneten Bindemittelschicht und einer darin enthaltenen bildmäßigen Verteilung eines gelben Bildfarbstoffes, dadurch gekennzeichnet, daß der gelbe Bildfarbstoff ein Kupfer- oder Nickelkomplex eines Azofarbstoffes ist, der in einer seiner tautomeren Formen der folgenden Formel entspricht

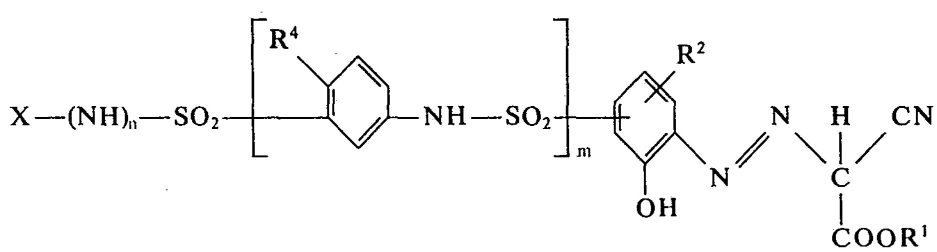

worin bedeuten

X H oder CAR, wobei CAR einen mindestens eine diffusionsfestmachende Gruppe enthaltenden Trägerrest bedeutet;
$R^1$ Alkyl, Alkenyl oder Cycloalkyl mit bis zu 8 C-Atomen;
$R^2$ H oder Cl;
$R^4$ H, Cl, $-CH_3$, $-OCH_3$ oder $-OC_2H_5$;
m 0 oder 1;
n 0 oder 1.

**Claims**

1. Colour photographic recording material for the production of coloured images by the dye diffusion transfer process, which contains a non-diffusing colour-providing compound associated with at least one photosensitive silver halide emulsion layer, from which compound a diffusible azo dye which can be complexed by metal ions is released under the conditions of alkaline development as a function of the development of the silver halide emulsion layer, characterised in that the azo dye corresponds, in one of its tautomeric forms, to the following formula II:

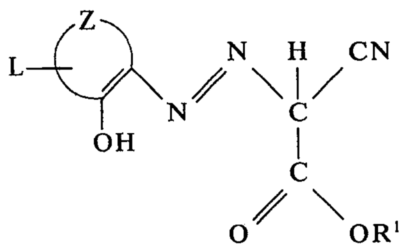

(II)

wherein

$R^1$ denotes alkyl, alkenyl or cycloalkyl with up to 8 C atoms;
Z denotes a radical to complete a benzene or naphthalene ring; and
L denotes a substituent having a group resulting from cleavage from a carrier radical.

2. Recording material according to Claim 1, characterised in that the diffusible azo dye which can be complexed by metal ions corresponds to the following formula

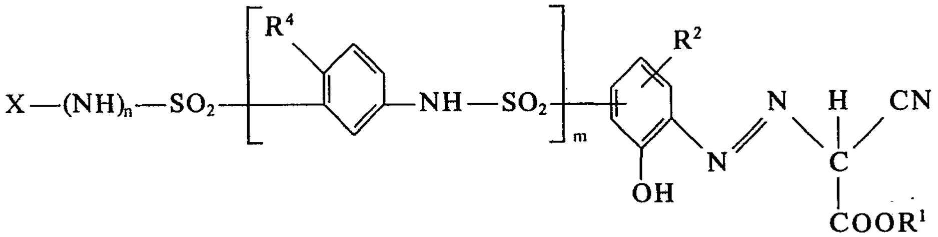

wherein

X denotes H;
$R^1$ denotes alkyl, alkenyl or cycloalkyl with up to 8 C atoms;
$R^2$ denotes H or Cl;
$R^4$ denotes H, Cl, $-CH_3$, $-OCH_3$ or $-OC_2H_5$;
m denotes 0 or 1; and
n denotes 0 or 1.

3. Photographically produced colour image, consisting of a binder layer arranged on a layer support and, contained in said binder layer, an imagewise distribution of a yellow image dye, characterised in that the yellow image dye is a copper or nickel complex of an azo dye which corresponds, in one of its tautomeric forms, to the following formula

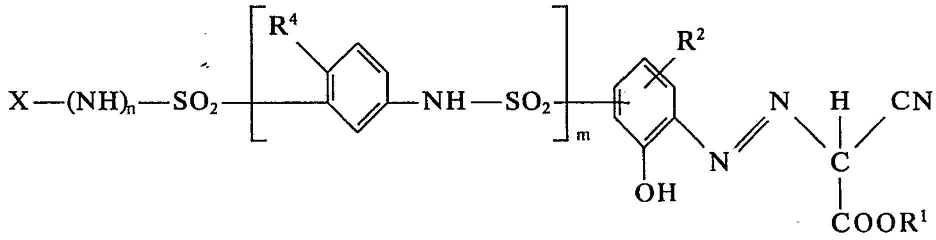

wherein

X denotes H or CAR, CAR denoting a carrier radical containing at least one group imparting diffusion resistance;
$R^1$ denotes alkyl, alkenyl or cycloalkyl with up to 8 C atoms;
$R^2$ denotes H or Cl;
$R^4$ denotes H, Cl, $-CH_3$, $-OCH_3$ or $-OC_2H_5$;
m denotes 0 or 1; and
n denotes 0 or 1.

## Revendications

1. Matériau d'enregistrement photographique en couleur pour la production d'images colorées per le procédé de transfert par diffusion de colorants, qui comporte en association avec au moins une couche photosensible d'émulsion d'halogénure d'argent un composé chromogène non diffusible duquel est libéré dans les conditions du développement alcalin, en fonction du développement de la couche d'émulsion d'halogénure d'argent, un colorant azoïque diffusible complexable par des ions métalliques, caractérisé en ce que le colorant azoïque répond sous l'une de ses formes tautomères à la formule II suivante:

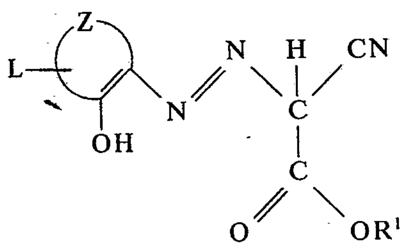

(II)

dans laquelle

$R^1$ désigne un groupe alkyle, alcényle ou cycloalkyle ayant jusqu'à 8 atomes de carbone;
Z est un reste complétant un noyau benzénique ou naphtalénique; et
L est un substituant avec un groupe qui résulte de l'élimination d'un reste de support.

2. Matériau d'enregistrement suivant la revendication 1, caractérisé en ce que le colorant azoïque diffusible complexable par des ions métalliques répond à la formule suivante

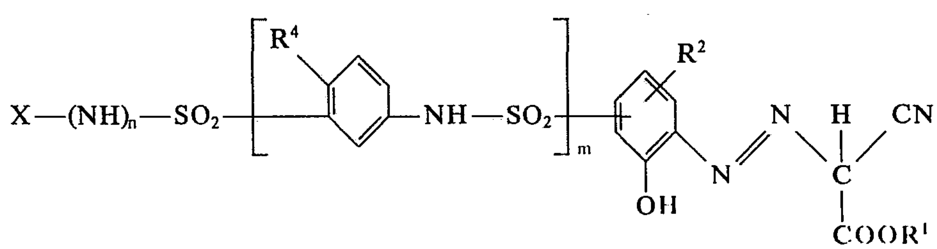

dans laquelle

X représente H;
$R^1$ est un groupe alkyle, alcényle ou cycloalkyle ayant jusqu'à 8 atomes de carbone;
$R^2$ représente H ou Cl;
$R^4$ représente H, Cl, $-CH_3$, $-OCH_3$ ou $-OC_2H_5$;
m a la valeur 0 ou 1;
n a la valeur 0 ou 1.

3. Image en couleur produite par photographie, constituée par une couche de liant disposée sur un support de couche et par la répartition dans cette couche, d'après l'image, d'un colorant d'image jaune, caractérisée en ce que le colorant d'image jaune est un complexe de cuivre ou de nickel d'un colorant azoïque qui répond, sous l'une de ses formes tautomères, à la formule suivante

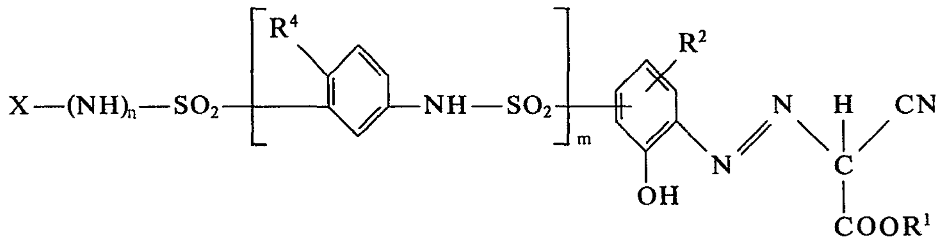

dans laquelle

X représente H ou un reste CAR, ce reste CAR désignant un reste de support contenant au moins un groupe de non diffusibilité;
$R^1$ est un groupe alkyle, alcényle ou cycloalkyle ayant jusqu'à 8 atomes de carbone;
$R^2$ représente H ou Cl;
$R^4$ représente H, Cl, $-CH_3$, $-OCH_3$ ou $-OC_2H_5$;
m a la valeur 0 ou 1;
n a la valeur 0 ou 1.